# EUROPEAN PATENT SPECIFICATION

(11) **EP 3 613 898 B1**
(45) Date of publication and mention of the grant of the patent: **19.06.2024**
(21) Application number: 18788209.7
(22) Date of filing: 16.04.2018
(51) Int. Cl.: D07B 1/06, B60C 15/04

(54) **CABLE BEAD AND AIRPLANE TIRE USING SAME**
KABELWULST UND FLUGZEUGREIFEN MIT VERWENDUNG DAVON
TALON À CÂBLE ET PNEU D'AVION L'UTILISANT

(30) Priority: 17.04.2017 JP 2017081623
(43) Date of publication of application: 26.02.2020
(73) Proprietor: Bridgestone Corporation, Tokyo 104-8340 (JP)
(72) Inventor: FUKAGAWA, Hideaki, Tokyo 104-8340 (JP)
(74) Representative: Marks & Clerk LLP
(86) International application number: PCT/JP2018/015768
(87) International publication number: WO 2018/194038

(56) References cited:
- EP-A1- 1 657 081
- WO-A1-00/44954
- WO-A1-2012/093715
- WO-A1-2019/048091
- JP-A- H0 473 280
- JP-A- H0 598 349
- JP-A- H05 147 414
- JP-A- H06 211 009
- JP-A- H11 256 486
- JP-A- 2011 179 160
- KR-A- 20120 090 604
- US-B1- 6 571 847
- US-B2- 6 991 017

## Description

### TECHNICAL FIELD

The present invention relates to a cable bead and an airplane tire including the same (hereinafter, also simply referred to as "tire"). More particularly, the present invention relates to: a cable bead which can realize a weight reduction while maintaining the breaking pressure resistance; and an airplane tire including the same.

### BACKGROUND ART

As a bead core of an airplane tire, there is known a so-called cable bead having a circular cross-section, in which at least one layer of sheath is formed by spirally winding a sheath filament around an annular core. As a technology for improving such a cable bead, Patent Document 1 proposes a cable bead having a five-layer structure.

In this cable bead, the sheath filament is a brass-plated carbon steel, and the core is constituted by a carbon steel having a carbon content that is equivalent to or less than that of the sheath filament. The bead durability is improved by setting a ratio b/a to be higher than 0.90 (b/a > 0.90), where "b" is the inner diameter of a filament when this cable bead is taken out of a new tire using the cable bead and the filament is loosened from the sheath filament wound in a coil form, and "a" is the inner diameter of the bead embedded in the tire.

Further, in Patent Document 1, the carbon content of the sheath filament is examined as well. Specifically, it is described that the bead cannot withstand the stress applied thereto during running when the carbon content of the sheath filaments is less than 0.50% by weight, whereas when the carbon content is higher than 0.90% by weight, it is difficult to bend the sheath filament at the time of shaping and a minimum elongation required for a bead capable of withstanding the stress acting thereon during tire running cannot be ensured. Attention is also drawn to the disclosure of KR2012-0090604A.

### RELATED ART DOCUMENT

### PATENT DOCUMENT

[Patent Document 1] JPH06-211009A

### SUMMARY OF THE INVENTION

### PROBLEMS TO BE SOLVED BY THE INVENTION

One of the demands from airplane fuselage manufactures to tire makers today is a reduction in tire weight. In cable beads that serve as a core supporting an airplane fuselage, the structure thereof, namely the core diameter, the sheath diameter and the number of sheath filaments, are determined based on the breaking pressure resistance.

The breaking pressure resistance is largely influenced by the strength of each sheath filament and the number of sheath filaments and, in order to ensure a high breaking pressure resistance, it is necessary to improve the sheath filament strength. Accordingly, the sheath filament strength is conventionally improved by increasing the sheath filament diameter. However, an increase in the sheath filament diameter leads to an increase in the cable bead weight. Therefore, it is in a conflicting relationship to maintain a breaking pressure resistance of a tire and to reduce the weight of the tire.

In view of the above, an object of the present invention is to provide: a cable bead which can realize a weight reduction while maintaining the breaking pressure resistance; and an airplane tire including the same.

### MEANS FOR SOLVING THE PROBLEMS

The present inventor intensively studied to solve the above-described problems and consequently discovered that the problems can be solved by controlling not only the carbon content of a sheath filament but also the chromium content of the sheath filament to be in a prescribed range, thereby completing the present invention.

That is, a cable bead of the present invention is provided as claimed in claim 1.

The carbon content is measured by an infrared absorption method in accordance with JIS G1211 (Appendix 3: Determination of total carbon content - high-frequency induction heating furnace combustion) and, more specifically, can be determined by dissolving steel through high-frequency heating and performing a quantitative analysis based on an infrared absorption method using an apparatus, such as "CS-400" manufactured by LECO Japan Corporation. Moreover, the chromium content, the silicon content and the manganese content are measured in accordance with JIS G1258-1 (Emission intensity ratio method) and, more specifically, can be determined by an ICP analysis (emission spectrometry) of a steel material dissolved in an aqueous solution of hydrochloric acid:nitric acid:water = 1: 1:2 (mass ratio).

The cable bead of the present invention preferably has a layered structure of (1+A+B+C+D+E), wherein A is 6 to 12, B is 12 to 20, C is 18 to 28, D is 24 to 34, and E is 30 to 38. The " 1" in this layered structure represents a core. In the cable bead of the present invention, it is preferred that the sheath filament be plated with brass. Further, in the cable bead of the present invention, it is preferred that the sheath filament has a tensile strength of 2,000 MPa or higher.

An airplane tire of the present invention is characterized by including the cable bead of the present invention.

### EFFECTS OF THE INVENTION

According to the present invention, a cable bead which can realize a weight reduction while maintaining the breaking pressure resistance, and an airplane tire including the same can be provided.

### BRIEF DESCRIPTION OF THE DRAWINGS

[FIG. 1] FIG. 1 is a schematic cross-sectional view of a cable bead according to one preferred embodiment of the present invention.
[FIG. 2] FIG. 2 is a schematic cross-sectional view of an airplane tire according to one preferred embodiment of the present invention, taken along the tire width direction.

### MODE FOR CARRYING OUT THE INVENTION

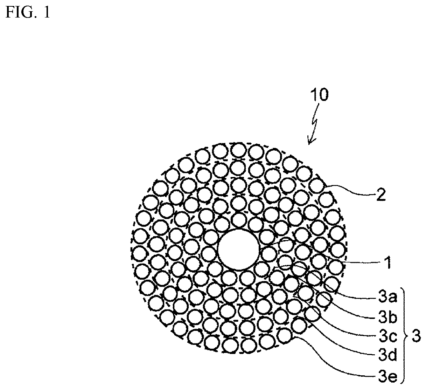

The cable bead of the present invention will now be described in detail referring to the drawings. FIG. 1 is a schematic cross-sectional view of a cable bead according to one preferred embodiment of the present invention. A cable bead 10 of the present invention includes: a core 1 composed of an annularly formed steel; and a sheath 3 composed of at least one sheath layer, which is formed by spirally winding a sheath filament 2 composed of a steel around the core 1. In the illustrated example, the sheath 3 has five sheath layers consisting of a first sheath layer 3a, a second sheath layer 3b, a third sheath layer 3c, a fourth sheath layer 3d and a fifth sheath layers 3e; however, the structure of the cable bead 10 of the present invention is not restricted thereto, and the cable bead 10 of the present invention may have five or more sheath layers. The illustrated cable bead 10 has a (1+11+17+23+29+35) structure.

In the cable bead 10 of the present invention, the sheath filament 2 has a carbon content of higher than 0.90% by mass but 0.95% by mass or less, and a chromium content of 0.15 to 0.30% by mass. By satisfying these conditions, the diameter of the sheath filament 2 can be reduced, so that the weight of the cable bead 10 can be reduced. In other words, by controlling the chromium content in the above-described range, since the above-described defects that the sheath filament is difficult to bend at the time of shaping and a minimum elongation required for a bead capable of withstanding the stress acting thereon during tire running cannot be ensured do not occur even when the carbon content is higher than 0.90% by mass, the strength of the sheath filament 2 can be improved. As a result, the diameter of the sheath filament 2 can be reduced, so that a reduction in tire weight can be realized. When the chromium content in the sheath filament 2 is less than 0.15% by mass, the above-described effects cannot be obtained, and the sheath filament 2 cannot be imparted with a sufficient strength. Meanwhile, a chromium content of higher than 0.30% by mass is not preferred since it is disadvantageous in terms of cost and saturates the effects of the present invention. The carbon content is preferably 0.91 to 0.94% by mass, and the chromium content is preferably 0.20 to 0.25% by mass, more preferably 0.20 to 0.23% by mass. By satisfying these conditions, variations in the carbon content and the chromium content throughout the cable bead can be suppressed, as a result of which variations in the physical properties of the cable bead are reduced.

It is preferred that the cable bead 10 of the present invention has a layered structure of (1+A+B+C+D+E), i.e., the sheath 3 arranged around the core 1 be constituted by five sheath layers. In addition, as for the number of the sheath filaments 2, it is preferred that A, B, C, D and E be 6 to 12, 12 to 20, 18 to 28, 24 to 34, and 30 to 38, respectively. A (1+11+17+23+29+35) structure is preferred. By adopting this structure, when the cable bead of the present invention is used as a bead core of an airplane tire, a sufficient breaking pressure resistance is exerted and the weight of the tire can be reduced.

Further, in the cable bead 10 of the present invention, the sheath filament 2 is preferably treated by plating. Examples of a plating treatment include brass plating, bronze plating, copper plating and zinc plating, among which brass plating is preferred. By plating the sheath filament 2 with brass, the adhesion between the cable bead 10 and a rubber can be improved, so that the tire durability can be enhanced. The composition of the brass plating is not particularly restricted; however, the copper content is preferably not less than 60% by mass.

Moreover, in the cable bead 10 of the present invention, the sheath filament 2 preferably has a tensile strength of 2,000 MPa or higher. By controlling the tensile strength of the sheath filament 2 to be 2,000 MPa or higher, when the cable bead 10 of the present invention is used as a bead core of an airplane tire, a sufficient strength can be exerted. In addition, the higher the tensile strength of the sheath filament 2, the smaller can be the number of the sheath filaments 2, which is also preferred from the standpoint of reducing the tire weight.

Furthermore, in the cable bead 10 of the present invention, the sheath filament 2 has a diameter of 1.50 to 2.00 mm. By controlling the diameter of the sheath filament in this range, when the cable bead 10 of the present invention is used as a bead core of an airplane tire, the weight of the tire can be sufficiently reduced, and the tire can exert a sufficient strength. In the cable bead 10 of the present invention, from the standpoint of lightweightness and strength, the diameter of the core filament is 2.0 to 8.0 mm.

Other aspects of the cable bead 10 of the present invention are not particularly restricted as long as the carbon content and the chromium content in the sheath filament 2 satisfy the above-described respective ranges. For example, the core 1 of the cable bead 10 can be produced in an annular shape by butt-welding the ends of a core filament. Subsequently, the sheath filament 2 satisfying the above-described requirements, which has been, for example, wound on a supply reel and thereby spirally shaped, is spirally wound on the core 1, whereby the cable bead 10 of the present invention can be produced. The material of the core filament is also not particularly restricted, and any material used as a core of a conventional cable bead can be employed.

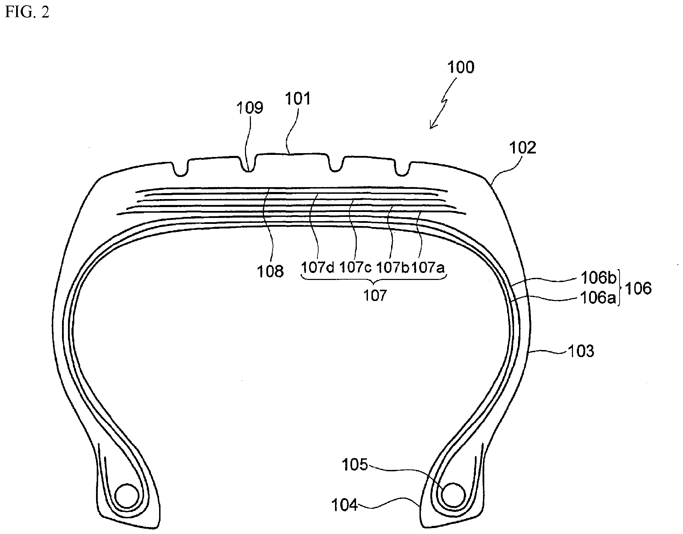

The airplane tire of the present invention will now be described. FIG. 2 is a schematic cross-sectional view of an airplane tire according to one preferred embodiment of the present invention, taken along the tire width direction. An illustrated tire 100 includes: a tread portion 101; a pair of shoulder portions 102 positioned on the respective tire radial-direction outer sides of the tread portion 101; a pair of side wall portions 103 extending inward in the tire radial direction from the side of each shoulder portion 102; bead portions 104 connected to the tire radial-direction inner side of each side wall portion 103; and bead cores 105 having a circular cross-section, which are embedded in the respective bead portions 104.

The tire 100 further includes a radial carcass 106 constituted by two layers of carcass plies extending between the pair of the bead portions 104. This radial carcass 106 consists of a first radial carcass ply 106a and a second radial carcass ply 106b, which toroidally extend from the tread portion 101 to the pair of bead portions 104 through the pair of the shoulder portions 102 and the pair of the side wall portions 103 and are folded back around the bead cores 105 embedded in the bead portions 104. The illustrated example shows a case where the number of carcass plies is 2; however, in the tire of the present invention, the number of carcass plies can be appropriately modified as required.

The tire 100 of the present invention includes the cable bead of the present invention as each of the bead cores 105 embedded in the bead portions 104. As described above, the cable bead of the present invention can realize a weight reduction while maintaining the breaking pressure resistance of an airplane tire. Therefore, as compared to a conventional tire, the tire 100 of the present invention has superior lightweightness while maintaining the breaking pressure resistance.

In the tire 100 of the present invention, there is no particular restriction other than the use of the cable bead of the present invention as each of the bead cores 105 and, with regard to other structure and the like, any known structure can be employed. For example, in the illustrated example, a belt 107 constituted by four belt layers 107a, 107b, 107c and 107d, and a single belt protective layer 108 are sequentially arranged on the tire radial-direction outer side of the radial carcass 106 in the tread portion 101. Further, a tread rubber is arranged on the tire radial-direction outer side of the belt protective layer 108, and grooves 109 such as circumferential grooves extending in the tire circumferential direction are formed on the surface of the tread rubber. The illustrated example shows a case where the belt 107 is constituted by a total of four belt layers 107a, 107b, 107c and 107d; however, in the tire 100 of the present invention, the number and the positions of belt layers can be set arbitrarily as required. Further, in the tire 100 of the present invention, the belt 107 and the belt protective layer 108 may each have any constitution.

### EXAMPLES

The present invention will now be described in detail by way of examples thereof.

### <Conventional Example, Comparative Examples 1 to 3, and Examples 1 to 4>

Using each steel filament having the carbon content and the chromium content that is shown in Tables 1 and 2, cable beads having the respective structures shown in these Tables are prepared at a size of Φ23 mm, and the weight thereof is determined. Further, using each of the cable beads, tires of the type illustrated in FIG. 2 are produced at a tire size of 52×21.0R22 38PR, and the breaking pressure safety ratio is determined according to the procedure described below. The expected results thereof is shown in Tables 1 and 2.

The tensile strength and the torsion value are measured based on the tensile test and torsion test of JIS G3522.

### <Safety Ratio>

A tire is mounted on a rim having a size of 52×21R22 and, in the process of filling the tire with water to increase the internal pressure, the ratio of the tire-breaking pressure with respect to the normal internal pressure prescribed by TRA (tire-breaking pressure/normal internal pressure prescribed by TRA) is measured. In TSO defined by the U.S. Federal Aviation Administration (FAA), an airplane tire is prescribed to have a safety ratio of 4 times or higher. A larger value means superior pressure resistance. It is noted here that an index value of 100 in Tables below corresponds to a safety ratio of 4 times.

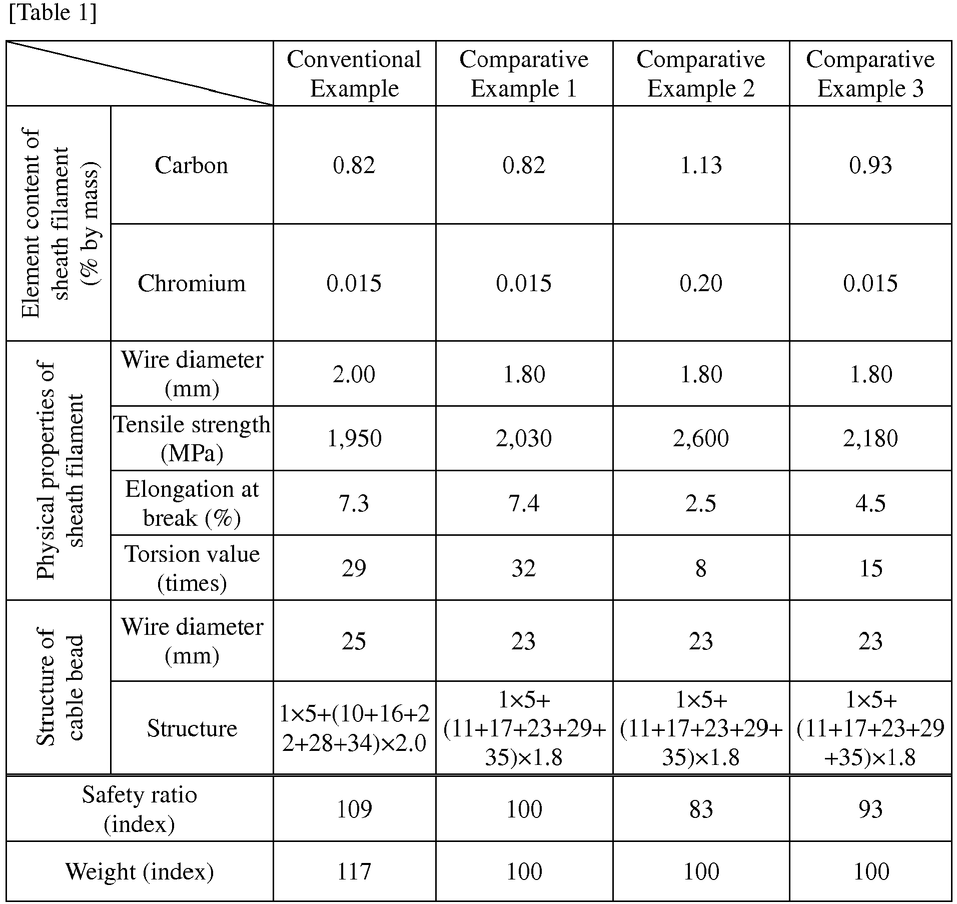

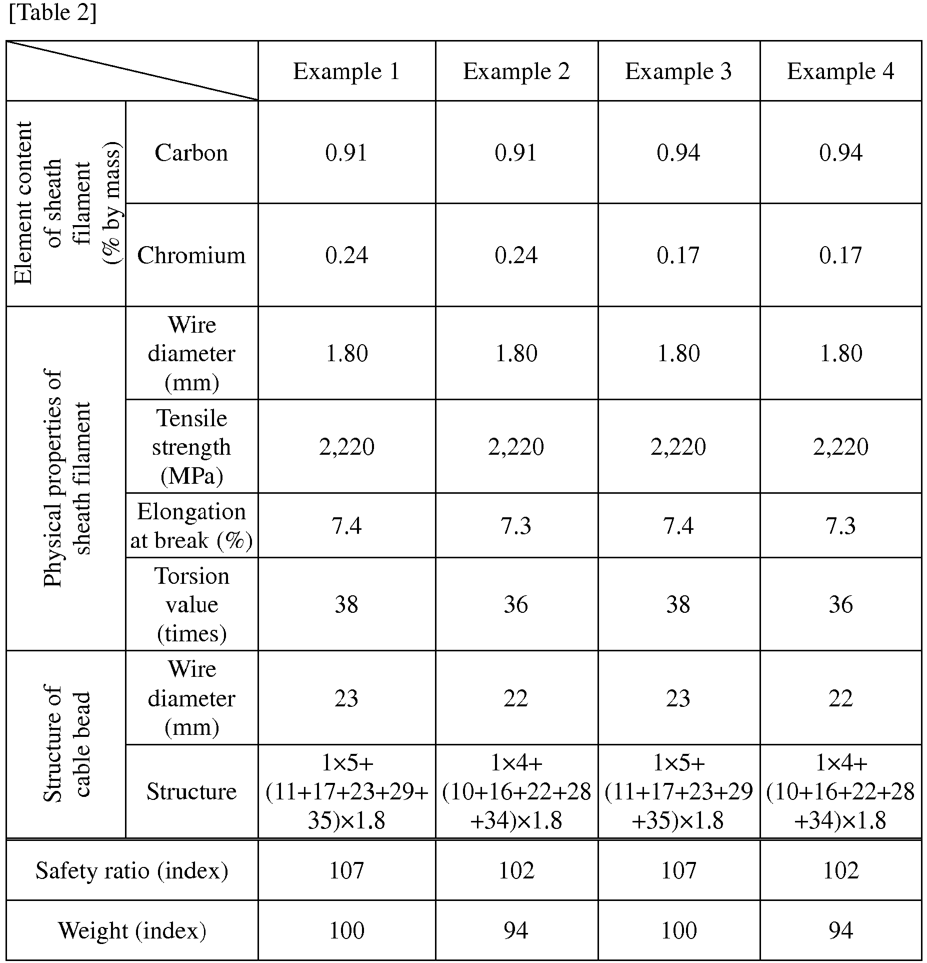

From the above, it is seen that the cable bead of the present invention can be expected to realize a weight reduction while maintaining the breaking pressure resistance of an airplane tire.

### DESCRIPTION OF SYMBOLS

1: core
2: sheath filament
3: sheath
10: cable bead
100: airplane tire (tire)
101: tread portion
102: shoulder portion
103: side wall portion
104: bead portion
105: bead core
106: radial carcass
107: belt
108: belt protective layer
109: groove

## Claims

1. A cable bead (10) for airplane tire (100) comprising:
a core (1) composed of one annularly formed steel core filament; and
a sheath (3) composed of at least one sheath layer, which is formed by spirally winding a sheath filament (2) composed of a steel around the core (1),
wherein
the sheath filament (2) has a carbon content of higher than 0.90% by mass but 0.95% by mass or less, and a chromium content of 0.15 to 0.30% by mass, **characterized in that**
the diameter of the core filament is 2.0 to 8.0 mm, and
the sheath filament (2) has a diameter of 1.50 to 2.00 mm.

2. The cable bead (10) according to claim 1, having a layered structure of 1+A+B+C+D+E, wherein A is 6 to 12, B is 12 to 20, C is 18 to 28, D is 24 to 34, and E is 30 to 38.

3. The cable bead (10) according to claim 1 or 2, wherein the sheath filament (2) is plated with brass.

4. The cable bead (10) according to any one of claims 1 to 3, wherein the sheath filament (2) has a tensile strength of 2,000 MPa or higher.

5. An airplane tire (100) comprising the cable bead (10) according to any one of claims 1 to 4.

## Patentansprüche

1. Kabelwulst (10) für Flugzeugreifen (100), Folgendes umfassend:
einen Kern (1), der aus einem ringförmig geformten Stahlkernfilament besteht; und
einen Mantel (3), der aus mindestens einer Mantelschicht besteht, die durch spiralförmiges Wickeln eines Mantelfilaments (2), das aus einem Stahl besteht, um den Kern (1) gebildet wird,
wobei
das Mantelfilament (2) einen Kohlenstoffgehalt von mehr als 0,90 Massenprozent, aber 0,95 Massenprozent oder weniger, und einen Chromgehalt von 0,15 bis 0,30 Massenprozent aufweist, **dadurch gekennzeichnet, dass**
der Durchmesser des Kernfilaments 2,0 bis 8,0 mm beträgt, und
das Mantelfilament (2) einen Durchmesser von 1,50 bis 2,00 mm aufweist.

2. Kabelwulst (10) nach Anspruch 1 mit einer Schichtstruktur von 1 + A + B + C + D + E, wobei A 6 bis 12 ist, B 12 bis 20 ist, C 18 bis 28 ist, D 24 bis 34 ist, und E 30 bis 38 ist.

3. Kabelwulst (10) nach Anspruch 1 oder 2, wobei das Mantelfilament (2) mit Messing überzogen ist.

4. Kabelwulst (10) nach einem der Ansprüche 1 bis 3, wobei das Mantelfilament (2) eine Zugfestigkeit von 2 000 MPa oder mehr aufweist.

5. Flugzeugreifen (100), der den Kabelwulst (10) nach einem der Ansprüche 1 bis 4 umfasst.

## Revendications

1. Tringle de câbles (10) pour pneumatique d'avion (100) comprenant :
une âme (1) composée d'un filament d'âme en acier de forme annulaire ; et
une gaine (3) composée d'au moins une couche de gaine, qui est formée par l'enroulement en spirale d'un filament de gaine (2) composé d'acier autour de l'âme (1),
dans laquelle
le filament de gaine (2) a une teneur en carbone supérieure à 0,90 % en masse, mais à 0,95 % en masse ou moins, et une teneur en chrome de 0,15 à 0,30 % en masse, **caractérisé en ce que**
le diamètre du filament d'âme est de 2,0 à 8,0 mm, et
le filament de gaine (2) a un diamètre de 1,50 à 2,00 mm.

2. Tringle de câbles (10) selon la revendication 1, ayant une structure en couches de 1 + A + B + C + D + E, dans laquelle A a une valeur de 6 à 12, B a une valeur de 12 à 20, C a une valeur de 18 à 28, D a une valeur de 24 à 34, et E a une valeur de 30 à 38.

3. Tringle de câbles (10) selon la revendication 1 ou 2, dans laquelle le filament de gaine (2) est plaqué de laiton.

4. Tringle de câbles (10) selon l'une quelconque des revendications 1 à 3, dans laquelle le filament de gaine (2) a une résistance à la traction de 2 000 MPa ou plus.

5. Pneumatique d'avion (100) comprenant la tringle de câbles (10) selon l'une quelconque des revendications 1 à 4.
